# FASCICULE DE BREVET EUROPEEN

(11) **EP 1 595 629 B1**
(45) Date de publication et mention de la délivrance du brevet: **29.06.2011**
(21) Numéro de dépôt: 05007173.7
(22) Date de dépôt: 01.04.2005
(51) Int. Cl.: B23C 3/32, B23Q 1/54, B60T 13/14

(54) **Dispositif d'usinage de rainures dans un alesage cylindrique, en particulier d'un maitre-cylindre de frein**
Vorrichtung für die Bearbeitung von Nuten in einer zylindrischen Bohrung, insbesondere eines Bremssteuerzylinders
Device for manufacturing grooves in a cylinder bore, particularly of a brake master cylinder

(30) Priorité: 29.04.2004 FR 0404612
(43) Date de publication de la demande: 16.11.2005
(73) Titulaire: ROBERT BOSCH GMBH, 70442 Stuttgart (DE)
(72) Inventeur: Leon, Thomas, 08917 Barcelone (ES)
(74) Mandataire: Hurwic, Aleksander Wiktor

(56) Documents cités:
- DE-C- 4 108 076
- FR-A- 1 256 688
- GB-A- 1 399 037
- GB-A- 1 528 199
- PATENT ABSTRACTS OF JAPAN vol. 0110, no. 10 (M-552), 10 janvier 1987 (1987-01-10) & JP 61 188014 A (MITSUBISHI HEAVY IND LTD), 21 août 1986 (1986-08-21)

## Description

La présente invention concerne un dispositif d'usinage de rainures dans un alésage cylindrique, en particulier d'un maître-cylindre de frein pour véhicule automobile.

Un tel dispositif est connu par example du document FR-A-1256588.

Dans la technique actuelle, un maître-cylindre de frein, tel qu'un maître-cylindre tandem, comprend un corps formé avec un alésage axial comportant des portées cylindriques de guidage d'un piston primaire et d'un piston secondaire, ces portées cylindriques étant adjacentes à des logements de joints d'étanchéité qui sont montés dans le corps du maître-cylindre et qui coopèrent avec les pistons primaire et secondaire. Des rainures de passage de liquide de frein sont formées dans les portées cylindriques pour permettre le retour du liquide de frein vers le réservoir qui alimente le maître-cylindre, au relâchement de la pédale de frein.

Les joints d'étanchéité montés au voisinage des portées cylindriques sont soumis aux forces de pression du liquide de frein et ont tendance à s'extruder dans les rainures des portées cylindriques. La présence de micro-bavures ou micro-soudures aux extrémités des rainures est par ailleurs susceptible de provoquer une détérioration plus rapide des joints d'étanchéité.

Les dispositifs d'usinage actuellement utilisés pour réaliser ces rainures ne sont pas satisfaisants et ne permettent pas d'usiner les rainures de façon rapide avec une précision suffisante. Ils ne sont pas non plus aptes à usiner dans les portées cylindriques des rainures hélicoïdales qui endommagent moins les joints d'étanchéité que des rainures droites parallèles à l'axe de l'alésage, comme cela a été constaté en pratique.

La présente invention a notamment pour but de résoudre le problème de l'usinage de ces rainures de façon simple, fiable et économique.

Elle propose à cet effet un dispositif d'usinage de rainures dans un alésage cylindrique débouchant à l'extrémité d'une pièce, caractérisé en ce qu'il comprend :
- un outil cylindrique à denture périphérique formée d'une série de dents de coupe qui s'étendent en oblique par rapport à l'axe de l'outil, cet outil étant destiné à être introduit axialement dans l'alésage de la pièce,
- un arbre porte-outil, à une extrémité duquel l'outil est fixé de façon à s'étendre dans le prolongement axial de l'arbre,
- des moyens d'entraînement de l'arbre en mouvement orbital autour d'un axe fixe qui coupe l'axe de l'arbre et de l'outil en un point situé au niveau d'une extrémité avant de la denture de l'outil,
- des moyens d'immobilisation de l'arbre en rotation autour de son axe,
- et des moyens de déplacement relatif en translation axiale de la pièce comprenant l'alésage et de l'arbre porte-outil.

Ce dispositif présente un nombre d'avantages importants :
- il permet d'usiner simultanément toutes les rainures d'une portée cylindrique ;
- grâce au mouvement orbital de l'outil, un petit nombre de dents travaillent simultanément en usinage, ce qui réduit l'échauffement de l'outil et l'effort d'usinage et augmente la précision de l'usinage ;
- le mouvement orbital de l'outil combiné au déplacement axial relatif entre l'outil et la pièce permet d'usiner des rainures de faible profondeur et de relativement grande longueur ;
- l'obliquité des dents de l'outil permet d'usiner des rainures de relativement grande largeur pour une faible amplitude de mouvement orbital.

Selon une autre caractéristique de l'invention, les moyens d'entraînement de l'arbre en mouvement orbital comprennent un élément cylindrique dont l'axe est l'axe fixe précité, des moyens de montage de cet élément en rotation autour de son axe sur un support fixe, des moyens de montage de l'arbre porte-outil en rotation autour de son axe dans un orifice cylindrique excentré dudit élément, et des moyens d'entraînement de l'élément en rotation autour dudit axe fixe.

Dans un mode de réalisation préféré de l'invention, ledit élément cylindrique est une douille cylindrique allongée qui est supportée et guidée en rotation à ses extrémités par des paliers extérieurs portés par le support fixe, et qui comprend un logement cylindrique dans lequel l'arbre porte-outil est supporté et guidé en rotation au moyen de paliers.

Cette configuration permet d'obtenir un guidage très précis du mouvement orbital de l'arbre porte-outil, ce qui améliore de manière significative la précision d'usinage des rainures.

Avantageusement, les moyens d'immobilisation en rotation de l'arbre porte-outil comprennent une double articulation de Cardan reliant à un support fixe l'extrémité de l'arbre opposée à celle portant l'outil.

Ces moyens d'immobilisation en rotation sont très sûrs, bon marché et peu sensibles à l'usure. Ils assurent de façon positive l'immobilisation en rotation de l'arbre porte-outil sans gêner son mouvement orbital.

Selon une autre caractéristique de l'invention, le dispositif comprend des moyens d'entraînement de la pièce en rotation autour de l'axe de l'alésage, pour la formation de rainures hélicoïdales dans la surface cylindrique interne de l'alésage.

Cela permet d'usiner des rainures hélicoïdales de façon simple et précise.

Le dispositif selon l'invention est avantageusement utilisé pour l'usinage de rainures hélicoïdales de passage de fluide dans des portées cylindriques internes d'un maître-cylindre de frein pour véhicule automobile.

L'invention concerne également un maître-cylindre de frein pour véhicule automobile, comprenant des portées cylindriques internes de guidage d'au moins un piston, qui sont formées avec des rainures de passage de liquide de frein, caractérisé en ce que lesdites rainures sont usinées au moyen du dispositif précité.

D'autres avantages et caractéristiques de l'invention apparaîtront à la lecture de la description suivante faite à titre d'exemple non limitatif et en référence aux dessins annexés dans lesquels :
- la figure 1 représente une vue en coupe axiale d'un maître-cylindre comportant des portées cylindriques formées avec des rainures de circulation de liquide de frein ;
- la figure 2 est une vue schématique en coupe axiale du dispositif d'usinage selon l'invention ;
- la figure 3 est une vue schématique agrandie de l'outil de la figure 2 ;
- la figure 4 illustre schématiquement le fonctionnement de l'outil lors d'une opération d'usinage ;
- la figure 5 est une vue schématique de droite, à plus grande échelle, d'une partie de la denture de coupe de l'outil représenté schématiquement en figure 4.

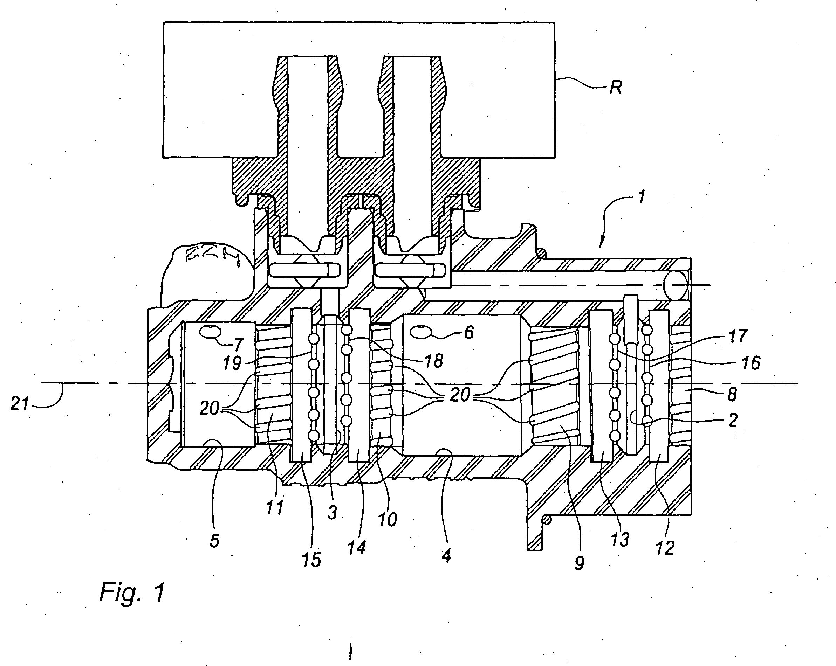

En figure 1, la référence 1 désigne un maître-cylindre tandem d'un dispositif de freinage pour véhicule automobile, qui comprend deux chambres d'alimentation 2, 3 reliées à un réservoir R de liquide de frein. Chaque chambre 2, 3 alimente en fluide hydraulique une chambre de travail 4, 5 qui alimente un circuit de freinage en liquide de frein sous pression par un orifice 6, 7 respectivement.

Un piston primaire (non représenté) est logé dans la chambre de travail 4 primaire pour commander la pression du liquide dans un premier circuit de freinage et un piston secondaire (non représenté) est logé dans la chambre de travail 5 secondaire pour commander la pression du liquide dans un second circuit de freinage.

Des portées cylindriques 8, 9, 10, 11 sont formées sur la surface interne du corps du maître-cylindre 1 pour le guidage des pistons primaire et secondaire et sont adjacentes à des logements annulaires 12, 13, 14, 15 recevant des joints d'étanchéité (non représentés) dans lesquels les pistons peuvent coulisser de façon étanche lors d'un freinage.

D'autre portées cylindriques 16, 17, 18, 19 de faible longueur axiale sont formées de part et d'autre des chambres d'alimentation 2, 3, entre celles-ci et les logements annulaires 12, 13, 14, 15 des joints d'étanchéité.

Des rainures 20, de préférence hélicoïdales par rapport à l'axe 21 du maître-cylindre 1, sont formées dans les portées cylindriques 8 à 11 et 16 à 19 pour permettre le retour du liquide de frein vers le réservoir R par les chambres 2, 3 à la fin d'un freinage, quand le conducteur relâche l'effort qu'il exerce sur la pédale de frein.

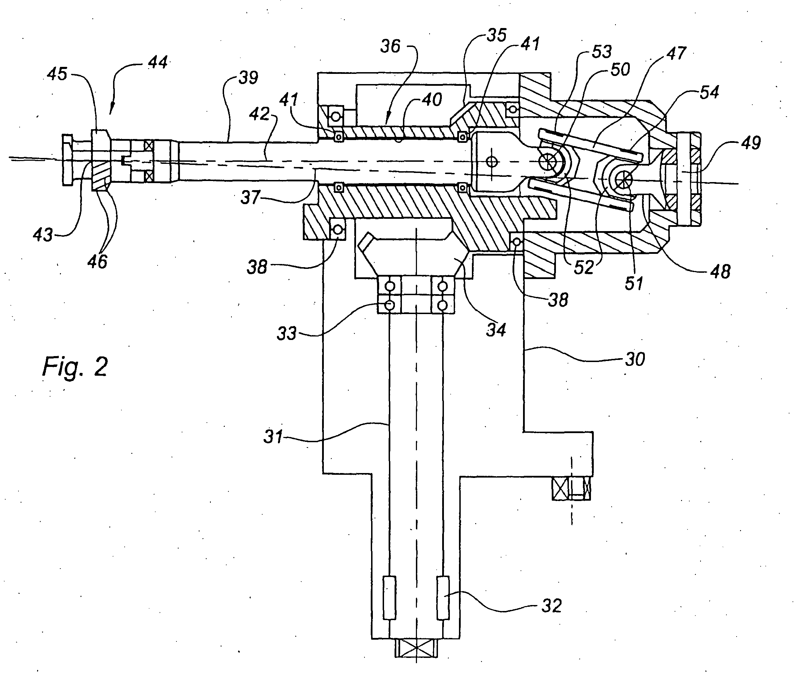

Ces rainures sont usinées dans les portées cylindriques du maître-cylindre au moyen du dispositif qui va maintenant être décrit en référence aux figures 2 et suivantes.

Ce dispositif comprend un châssis ou bâti fixe 30 sur lequel est monté un moteur électrique (non représenté) d'entraînement en rotation d'un arbre 31 qui s'étend verticalement dans la vue de la figure 2 et qui est centré et guidé en rotation par des paliers 32, 33 montés sur le châssis 30. A son extrémité libre, l'arbre 31 est solidaire d'un pignon conique 34 qui vient en prise avec une denture conique 35 d'une douille cylindrique allongée 36 qui s'étend perpendiculairement à l'arbre 31 et qui est supportée et guidée en rotation autour de son axe 37 par des roulements 38 montés dans le châssis 30.

La douille 36 est traversée par un arbre porte-outil 39, qui est reçu dans un logement cylindrique 40 de la douille et qui est guidé en rotation dans ce logement par des roulements 41, l'axe commun 42 du logement 40 et de l'arbre 39 étant incliné par rapport à l'axe 37 de la douille et rencontrant celui-ci en un point 43 situé à l'extrémité avant de l'arbre 39.

Cette extrémité avant porte un outil de coupe 44, fixé sur l'arbre 39 par tout moyen approprié tel qu'une vis, l'outil 44 comportant une denture périphérique 45 dont les dents 46 s'étendent en oblique par rapport à l'axe de l'outil, qui coïncide avec l'axe 42 de l'arbre 39.

Des moyens de réglage de la position longitudinale de l'outil 44 sur l'arbre sont prévus pour placer l'extrémité avant de la denture 45 au niveau du point de concours 43 des axes 37 et 42.

L'extrémité arrière de l'arbre 39 est reliée au châssis 30 par des moyens d'immobilisation en rotation, empêchant l'arbre 39 de tourner autour de son axe 42, mais autorisant son mouvement orbital autour de l'axe 37 de la douille 36 comme décrit en détail dans ce qui suit.

En figure 2, les moyens d'immobilisation en rotation sont formés par une double articulation de Cardan, comprenant un étrier double 47 monté entre l'extrémité de l'arbre 39 et une pièce 48 articulée sur le châssis 30 autour d'un axe 49 parallèle à l'arbre 31.

L'étrier 47 est articulé sur l'extrémité de l'arbre 39 autour d'un axe 50 perpendiculaire à l'axe 49 et à l'axe 42 de l'arbre 39, et est articulé sur la pièce 48 autour d'un axe 51 perpendiculaire à l'axe 49 et à l'axe 42.

Les liaisons de l'étrier 47 sur la pièce 48 et sur l'arbre 39 sont assurées par des noix 52 montées articulées sur l'étrier autour de deux axes parallèles 53, 54 contenus dans le plan du dessin et portant l'une l'axe 50 d'articulation sur l'arbre 39 et l'autre l'axe 51 d'articulation sur la pièce 48.

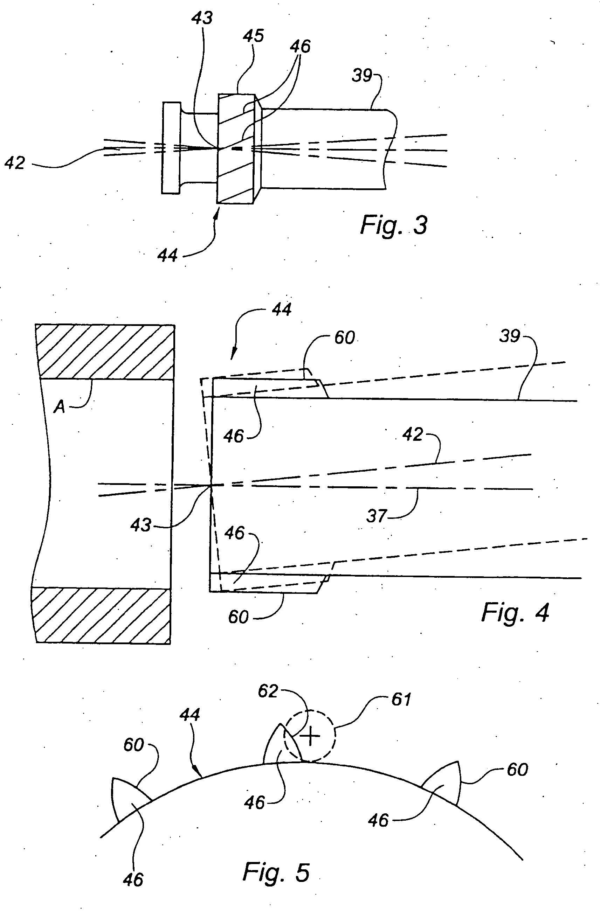

L'outil 44 est mieux visible sur la vue agrandie de la figure 3. Les dents 46 de coupe sont orientées en oblique sur une partie annulaire de l'extrémité de l'arbre porte-outil 39 et la denture 45 est de forme générale cylindrique ou tronconique, son diamètre extérieur étant par exemple plus grand à son extrémité avant qu'à son extrémité arrière, avec un angle faible par rapport à l'axe de l'outil 44.

Les dents 46 sont ici au nombre de douze, le nombre de dents 46 correspondant au nombre de rainures à usiner dans une portée cylindrique.

Le fonctionnement de ce dispositif est le suivant :

L'arbre 31 est entraîné en rotation par le moteur électrique et entraîne la douille 36 en rotation autour de son axe 37 à une vitesse comprise entre 2500 et 5000 tours/minutes environ.

La rotation de la douille 36 provoque un mouvement orbital de l'arbre porte-outil 39 autour de l'axe 37 de la douille 36, chaque point de l'arbre 39 décrivant un cercle centré sur un axe parallèle à l'axe 37 et dont le rayon dépend de la distance entre ce point et le point 43 de concours des axes 37 et 42 où l'amplitude du mouvement orbital est nulle, et de la distance de ce point à l'axe 42 de l'arbre porte-outil 39.

La rotation de l'arbre 39 autour de son axe 42 est empêchée par la double articulation de Cardan 47, 48 reliant l'extrémité arrière de l'arbre 39 au châssis 30. Cette immobilisation en rotation autour de l'axe 42 provoque toutefois un faible déplacement axial de l'arbre 39 (qui est de 0,6 millimètre dans un exemple de réalisation).

La denture 45 de l'outil 44 a un diamètre extérieur à son extrémité avant qui est sensiblement égal au diamètre intérieur de l'alésage A (ou de la portée cylindrique) dans lequel il faut usiner les rainures.

Le mouvement orbital des arêtes de coupe 60 des dents 46 autour de l'axe 37 de la douille 36 a lieu à une vitesse de rotation qui est égale à la vitesse de rotation de la douille 36. Ce mouvement est schématisé en figure 4 où une position médiane de l'outil 44 est représentée en trait plein et une autre position est représentée en traits pointillés, cette autre position correspondant à une inclinaison maximale (dans le plan du dessin) de la denture 45 dans un sens par rapport à l'axe 37.

Le mouvement orbital de l'outil 44 amène donc chaque arête de coupe 60 à osciller autour de la position représentée en trait plein en figure 4. Cette oscillation est combinée à un déplacement axial relatif entre l'outil 44 et la pièce à usiner qui fait pénétrer progressivement l'outil 44 dans l'alésage A.

La vitesse de translation axiale de la pièce par rapport à l'outil 44 est comprise par exemple entre 750 et 1200 millimètres/minutes environ. Au cours de ce déplacement axial, chaque arête de coupe 60 usine progressivement dans la surface cylindrique interne de l'alésage A, une rainure dont la longueur correspond au déplacement axial de l'arête de coupe 60, dont la largeur est définie par l'obliquité de l'arête de coupe 60 et par l'amplitude du mouvement orbital, et dont la profondeur est définie par l'amplitude de ce mouvement orbital.

Pour mieux faire comprendre la façon dont cet usinage est réalisé, une trajectoire 61 décrite par un point 62 d'une arête de coupe 60 a été représentée en traits pointillés en figure 5.

Au cours du mouvement orbital de la denture 45, seules trois dents 46 sur douze sont simultanément en contact à chaque instant avec la matière de la pièce à usiner, et les douze rainures sont successivement usinées à chaque révolution de la denture 45 autour de l'axe 37.

Si l'on fait tourner la pièce autour de l'axe 37 pendant sa translation axiale, les rainures sont usinées en hélice par rapport à l'axe de l'alésage A, l'angle de l'hélice par rapport à l'axe de l'alésage A étant égal à l'angle de rotation de la pièce autour de cet axe et étant par exemple de 20° environ dans un exemple de réalisation.

Le dispositif selon l'invention permet l'usinage de rainures hélicoïdales à l'intérieur d'un alésage, notamment de maître-cylindre sans endommager les arêtes des logements des joints d'étanchéité, ce qui provoquerait leur détérioration prématurée.

Il présente encore comme avantage d'utiliser un petit nombre de dents de coupe simultanément en usinage, ce qui réduit l'effort d'usinage (par exemple de 75% quand trois dents sur douze travaillent simultanément) et améliore également la lubrification de la face de coupe de l'outil, ce qui évite la formation de micro-soudures sur les arêtes de coupe. La réduction de l'effort d'usinage permet aussi d'augmenter la vitesse d'avance de l'outil, qui passe par exemple de 100 à 750 - 1200 millimètres par minute.

## Revendications

1. Dispositif d'usinage de rainures (20) dans un alésage cylindrique débouchant à l'extrémité d'une pièce (1), **caractérisé en ce qu'**il comprend :
- un outil cylindrique (44) à denture périphérique (45) formée d'une série de dents de coupe (46) qui s'étendent en oblique par rapport à l'axe (42) de l'outil, cet outil (44) étant destiné à être introduit axialement dans l'alésage de la pièce (1),
- un arbre (39) porte-outil, à une extrémité duquel l'outil (44) est fixé de façon à s'étendre dans le prolongement axial de l'arbre (39),
- des moyens d'entraînement de l'arbre (39) en mouvement orbital autour d'un axe (37) fixe qui coupe l'axe (42) de l'arbre (39) et de l'outil (44) en un point (43) situé au niveau d'une extrémité avant de la denture (45) de l'outil (44),
- des moyens (47, 48) d'immobilisation de l'arbre (39) en rotation autour de son axe (42),
- et des moyens de déplacement relatif en translation axiale de la pièce (1) et de l'arbre porte-outil (39).

2. Dispositif selon la revendication 1, **caractérisé en ce que** les moyens d'entraînement de l'arbre (39) en mouvement orbital comprennent un élément cylindrique (36) dont l'axe est l'axe fixe (37) précité, des moyens (38) de montage de cet élément en rotation autour de son axe (37) sur un support fixe (30), des moyens (41) de montage de l'arbre porte-outil (39) en rotation autour de son axe (42) dans un orifice (40) cylindrique excentré dudit élément (36), et des moyens (31, 34) d'entraînement de l'élément (36) en rotation autour dudit axe fixe (37).

3. Dispositif selon la revendication 2, **caractérisé en ce que** ledit élément cylindrique est une douille cylindrique allongée (36) qui est supportée et guidée en rotation à ses extrémités par des paliers (38) extérieurs portés par le support fixe (30), et qui comprend un logement (40) cylindrique dans lequel l'arbre porte-outil (39) est supporté et guidé en rotation au moyen de paliers (41).

4. Dispositif selon la revendication 3, **caractérisé en ce qu'**une extrémité de la douille (36) comprend une denture (35) extérieure en prise avec un pignon (34) moteur.

5. Dispositif selon l'une des revendications précédentes, **caractérisé en ce que** les moyens d'immobilisation (46, 47) en rotation de l'arbre porte-outil comprennent une double articulation de Cardan reliant à un support fixe (30) l'extrémité de l'arbre (39) opposée à celle portant l'outil (44).

6. Dispositif selon l'une des revendications précédentes, **caractérisé en ce qu'**il comprend des moyens d'entraînement de la pièce (1) en rotation autour de l'axe (21) de l'alésage, pour la formation de rainures (20) hélicoïdales dans la surface (64) cylindrique interne de l'alésage.

7. Dispositif selon l'une des revendications précédentes, **caractérisé en ce que** le rayon extérieur de la denture (45) périphérique de l'outil (44) est sensiblement égal au rayon interne de l'alésage.

8. Dispositif selon l'une des revendications précédentes, **caractérisé en ce que** la denture (45) périphérique de l'outil (44) est de forme générale tronconique ou cylindrique.

9. Dispositif selon l'une des revendications précédentes, **caractérisé en ce que** le nombre de dents (46) de l'outil est égal au nombre de rainures (20) à usiner.

10. Dispositif selon l'une des revendications précédentes, **caractérisé en ce que** la vitesse de rotation des moyens d'entraînement de l'arbre (39) en mouvement orbital est comprise entre 2500 et 5000 tours/minute environ.

11. Dispositif selon l'une des revendications précédentes, **caractérisé en ce que** la vitesse de translation axiale relative de la pièce (1) par rapport à l'outil (44) est comprise entre 750 et 1200 millimètres/minute environ.

12. Utilisation d'un dispositif selon l'une des revendications précédentes pour l'usinage de rainures (20) de passage de liquide de frein dans des portées cylindriques internes (8, 9, 10, 11) d'un maître-cylindre (1) de frein pour véhicule automobile.

## Claims

1. Device for machining grooves (20) in a cylindrical bore emerging at the end of a workpiece (1), **characterized in that** it comprises:
- a cylindrical tool (44) with a peripheral set of teeth (45) formed by a series of cutting teeth (46) which extend obliquely with respect to the axis (42) of the tool, this tool (44) being designed to be inserted axially in the bore of the workpiece (1),
- a tool-holder shaft (39), at one end of which the tool (44) is fixed in such a way as to extend in the axial extension of the shaft (39),
- means of driving the shaft (39) in an orbital movement about a fixed axis (37) which intersects the axis (42) of the shaft (39) and of the tool (44) at a point (43) situated at a forward end of the set of teeth (45) of the tool (44),
- means (47, 48) of immobilizing the shaft (39) in rotation about its axis (42),
- and means of relative displacement in axial translation of the workpiece (1) and of the tool-holder shaft (39).

2. Device according to Claim 1, **characterized in that** the means of driving the shaft (39) in orbital motion comprise a cylindrical component (36) whose axis is the said fixed axis (37), means (38) of mounting this component in rotation about its axis (37) on a fixed support (30), means (41) of mounting the tool-holder shaft (39) in rotation about its axis (42) in a cylindrical orifice (40) that is eccentric with respect to the said component (36), and means (31, 34) of driving the component (36) in rotation about the said fixed axis (37).

3. Device according to Claim 2, **characterized in that** the said cylindrical component is a long cylindrical socket (36) which is supported and guided in rotation at its ends by external bearings (38) carried by the fixed support (30), and which comprises a cylindrical housing (40) in which the tool-holder shaft (39) is supported and guided in rotation by means of bearings (41).

4. Device according to Claim 3, **characterized in that** one end of the socket (36) comprises an external set of teeth (35) engaged with a drive pinion (34).

5. Device according to one of the preceding claims, **characterized in that** the means of immobilization (46, 47) in rotation of the tool-holder shaft comprise a double universal joint connecting to a fixed support (30) the end of the shaft (39) that is opposite to the one carrying the tool (44).

6. Device according to one of the preceding claims, **characterized in that** it comprises means of driving the workpiece (1) in rotation about the axis (21) of the bore, for the formation of helical grooves (20) in the internal cylindrical surface (64) of the bore.

7. Device according to one of the preceding claims, **characterized in that** the external radius of the peripheral set of teeth (45) of the tool (44) is substantially equal to the internal radius of the bore.

8. Device according to one of the preceding claims, **characterized in that** the peripheral set of teeth (45) of the tool (44) is of generally truncated cone or cylindrical shape.

9. Device according to one of the preceding claims, **characterized in that** the number of teeth (46) of the tool is equal to the number of grooves (20) to be machined.

10. Device according to one of the preceding claims, **characterized in that** the speed of rotation of the means of driving the shaft (39) in orbital movement is between 2500 and about 5000 revolutions per minute.

11. Device according to one of the preceding claims, **characterized in that** the relative speed of axial translation of the workpiece (1) with respect to the tool (44) is between 750 and about 1200 millimeters per minute.

12. Use of a device according to one of the preceding claims for machining grooves (20) for the passage of brake fluid in internal cylinder walls (8, 9, 10, 11) of a brake master cylinder (1) for a motor vehicle.

## Patentansprüche

1. Vorrichtung für die Bearbeitung von Nuten (20) in einer zylindrischen Bohrung, die am Ende eines Werkstücks (1) mündet, **dadurch gekennzeichnet, dass** sie Folgendes aufweist:
- ein zylindrisches Werkzeug (44) mit umlaufender Verzahnung (45), die aus einer Reihe von Schneidezähnen (46) gebildet ist, die sich schräg zur Achse (42) des Werkzeugs erstrecken, wobei dieses Werkzeug (44) axial in die Bohrung des Werkstücks (1) eingeführt werden soll,
- eine Werkzeughaltewelle (39), an deren eines Ende das Werkzeug (44) so befestigt ist, dass es sich in die axiale Verlängerung der Welle (39) erstreckt,
- Mittel zum Antreiben der Welle (39) in eine Orbitalbewegung um eine feste Achse (37), die die Achse (42) der Welle (39) und des Werkzeugs (44) in einem Punkt (43) schneidet, der sich auf der Höhe eines vorderen Endes der Verzahnung (45) des Werkzeugs (44) befindet,
- Mittel (47, 48) zum Blockieren der sich um seine Achse (42) drehenden Welle (39),
und Mittel zum relativen Axialverschieben des Werkstücks (1) und der Werkzeughaltewelle (38).

2. Vorrichtung nach Anspruch, **dadurch gekennzeichnet, dass** die Mittel zum Antreiben der Welle (30) in eine Orbitalbewegung ein zylindrisches Element (36), dessen Achse die vorgenannte feste Achse (37) ist, Mittel (38) zum Anbringen dieses Elements, der sich um seine Achse (37) dreht, an einem festen Träger (30), Mittel (41) zum Anbringen der Werkzeughaltewelle (39), die sich um ihre Achse (42) dreht, in einer bezüglich des Elements (36) außermittigen zylindrischen Öffnung (40) und Mittel (31, 34) zum Antreiben des Elements (36), das sich um die feste Achse (37) dreht, aufweisen.

3. Vorrichtung nach Anspruch 2, **dadurch gekennzeichnet, dass** das zylindrische Element eine längliche zylindrische Hülse (36) ist, die an seinen Enden von Außenlagern (38), die vom festen Träger (30) getragen sind, gestützt und in Drehung geführt ist, und eine zylindrische Aufnahme (40) aufweist, in welcher die Werkzeughaltewelle (39) durch Lager (41) gestützt und in Drehung geführt ist.

4. Vorrichtung nach Anspruch 3, **dadurch gekennzeichnet, dass** ein Ende der Hülse (36) eine Außenverzahnung (35) aufweist, die mit einem Antriebsritzel (34) in Eingriff steht.

5. Vorrichtung nach einem der vorhergehenden Ansprüche, **dadurch gekennzeichnet, dass** die Mittel zum drehfesten Blockieren (46, 47) der Werkzeughaltewelle eine doppelte kardanische Anlenkung aufweist, die den festen Träger (30) mit dem Ende der Welle (39) verbindet, das zu demjenigen entgegengesetzt ist, das das Werkzeug (44) trägt.

6. Vorrichtung nach einem der vorhergehenden Ansprüche, **dadurch gekennzeichnet, dass** sie Mittel zum Antreiben des Werkstücks (1) in Drehung um die Achse (21) der Bohrung aufweist, um schraubenförmige Nuten (20) in der zylindrischen Innenfläche (64) der Bohrung zu bilden.

7. Vorrichtung nach einem der vorhergehenden Ansprüche, **dadurch gekennzeichnet, dass** der Außenradius der Umfangsverzahnung (45) des Werkzeugs (44) dem Innenradius der Bohrung im Wesentlichen gleich ist.

8. Vorrichtung nach einem der vorhergehenden Ansprüche, die Umfangsverzahnung (45) des Werkzeugs (44) im Allgemeinen kegelstumpfförmig oder zylindrisch ist.

9. Vorrichtung nach einem der vorhergehenden Ansprüche, **dadurch gekennzeichnet, dass** die Anzahl der Zähne (46) des Werkzeugs der Anzahl der zu bearbeitenden Nuten (20) gleich ist.

10. Vorrichtung nach einem der vorhergehenden Ansprüche, **dadurch gekennzeichnet, dass** die Drehgeschwindigkeit der Mittel zum Antreiben der Welle (39) in eine Orbitalbewegung etwa zwischen 2500 und 5000 U/min beträgt.

11. Vorrichtung nach einem der vorhergehenden Ansprüche, **dadurch gekennzeichnet, dass** die Geschwindigkeit der relativen axialen Verschiebung des Werkstücks (1) bezüglich des Werkzeugs (44) etwa zwischen 750 und 1200 mm/min beträgt.

12. Verwendung einer Vorrichtung nach einem der vorhergehenden Ansprüche für die Bearbeitung von Nuten (20) für den Durchlass von Bremsflüssigkeit in inneren zylindrischen Sitzflächen (8, 9, 10, 11) eines Bremshauptzylinders (1) für ein Kraftfahrzeug.
